# EUROPÄISCHE PATENTANMELDUNG

(11) **EP 0 870 945 A1**
(43) Veröffentlichungstag der Anmeldung: **14.10.1998**
(21) Anmeldenummer: 98105709.4
(22) Anmeldetag: 28.03.1998
(51) Int. Cl.: F16D 43/22, F16D 43/202

(54) **Kupplung zur Drehmomentbegrenzung**

(30) Priorität: 12.04.1997 DE 19715269
(71) Anmelder: GKN Walterscheid GmbH, 53797 Lohmar (DE)
(72) Erfinder: Nienhaus, Clemens, Dipl.-Ing., 53819 Neunkirchen-Seelscheid (DE)
(74) Vertreter: Harwardt, Günther, Dipl.-Ing.

(57) **Zusammenfassung**

Die Erfindung betrifft eine Kupplung 5 zur Drehmomentbegrenzung, insbesondere im Antriebsstrang zum Antrieb landwirtschaftlicher Geräte. Sie weist Mitnehmer 16 auf, die von der Drehmomentübertragungsposition in eine Abschaltposition nach innen bezüglich der Drehachse 15 verschoben werden, wenn der Überlastfall eintritt. Sie werden durch einen Schaltring 31 wieder zum Eingriff in eine Ausnehmung 47 der Kupplungshülse 49 bewegt, wenn eine übereinstimmende Lage zwischen den Mitnehmern 16 und den Ausnehmungen 47 vorhanden ist. Bei hohen Differenzdrehzahlen läßt dies ein Wiedereinschalten nicht zu, führt andererseits aber zu Verschleiß und Drehschwingungen und wird dadurch gemindert, daß dem die Mitnehmer 16 beaufschlagenden Schaltring 31 Fliehsegmente 41' zugeordnet sind, die bei Überschreitung des eingestellten Drehmomentes vom Schaltring 31 freigegeben werden und diesen und damit die Mitnehmer 16 an einer Einnahme der Drehmomentübertragungsposition hindern, solange eine vorbestimmte Grenzdrehzahl noch überschritten wird. Bei der Bewegung in die Abschaltposition als auch zurück in die Drehmomentübertragungsposition werden die Mitnehmer 16 durch einen Stützring 20 geführt, der eine gleichmäßige Bewegung bewirkt. Hierdurch wird der Verschleiß an den drehmomentübertragenden Flächen weiter verringert.

## Beschreibung

Die Erfindung betrifft eine Kupplung zur Drehmomentbegrenzung, insbesondere im Antriebsstrang zum Antrieb landwirtschaftlicher Geräte oder Maschinen, mit einer Kupplungsnabe und koaxial mit einer Lagerbohrung um diese angeordneten und daran relativ drehbar gelagerten Kupplungshülse, mit Mitnehmern, von denen jeder in einer Ausnehmung der Kupplungsnabe radial bezüglich einer Drehachse zwischen einer Drehmomentübertragungsposition und einer Ahschaltposition verstellbar ist und jeder Mitnehmer mindestens eine Schaltfläche besitzt und eine Drehmomentübertragungsfläche aufweist, wobei letztere in der Drehmomentübertragungsposition an einer Drehmomentübertragungsfläche in der Lagerbohrung der Kupplungshülse angreift, mit einem in Richtung der Drehachse an einer Seite der Mitnehmer verstellbar angeordneten Schaltring, der eine der Anzahl der Schaltflächen entsprechende Anzahl von Stützflächen zur Anstützung an den Schaltflächen der Mitnehmer aufweist und der in Richtung der Drehachse federbeaufschlagt ist und die Mitnehmer in die nach radial außen verlagerte Drehmomentübertragungsposition drängt und der entgegen der Kraft der Feder eine Verstellung der Mitnehmer in die radial innere Abschaltposition bei Überschreitung eines vorgegebenen Drehmomentes zuläßt.

In der GB-PS 849 516 ist eine Kupplung zur Drehmomentbegrenzung beschrieben. Dabei sind als Mitnehmer radial verschiebbare Nocken vorgesehen, die in radialen Durchbrüchen der Kupplungsnabe aufgenommen sind. Das innere Ende der Mitnehmer weist Schaltflächen auf, die mit entsprechenden Stützflächen zweier auf einem Bolzen sitzenden Schaltringe in die Drehmomentübertragungsposition nach außen bezüglich der Drehachse gedrängt werden. Jedem Schaltring ist eine Druckfeder zugeordnet. Diese sitzen ebenfalls, wie die Schaltringe, auf einem gemeinsamen, sie durchdringenden Spannbolzen, der in der Bohrung der Kupplungsnabe angeordnet ist. Im Überlastungsfalle, d.h., wenn das eingestellte Drehmoment überschritten wird, gleiten die Mitnehmer in ihre radial innere Abschaltposition. Sie stützen sich in der Lagerbohrung ab, bis sie im weiteren Umlauf gegen durch Rollen gebildete Drehmomentübertragungsflächen wiederum zur Anlage kommen. Das geschieht bei jedem Umlauf erneut und führt neben Schlägen zu Abnutzungserscheinungen an den Mitnehmern und den die entsprechenden Drehmomentübertragungsflächen bildenden Rollen.

In der DE-AS 12 16 622 ist eine Überlastkupplung beschrieben, bei der die Kupplungsnabe mit umfangsverteilten Taschen versehen ist, in welchen Mitnehmer in Form von Kugeln oder an den Enden konische Rollen aufgenommen sind, welche durch axial bezüglich der Längsachse der Kupplungsnabe wirkende Federn zum Eingriff in entsprechend umfangsverteilte Vertiefungen in der Innenfläche der Kupplungshülse beaufschlagt sind. Sie treten bei Überlast aus den Vertiefungen der Kupplungshülse aus, werden jedoch ständig durch die Federn zur Rückführung in die nachfolgende Vertiefung bei Relativdrehung von Kupplungsnabe und Kupplungshülse beaufschlagt.

Die US-PS 4 744 447 beschreibt eine Überlastkupplung, bei der Mitnehmer in Durchbrüchen einer Kupplungshülse radial geführt sind und zum Eingriff in Ausnehmungen einer Kupplungsnabe durch seitlich, d.h. axial bezüglich der Kupplungslängsachse angeordnete und federbeaufschlagte Schaltringe veranlaßt werden. Hierzu sind die Mitnehmer mit Schaltflächen und die Schaltringe mit Stützflächen versehen. Bei Überlast treten die Mitnehmer aus den Ausnehmungen aus und werden in dieser Abschaltposition gehalten.

In der nicht veröffentlichten deutschen Patentanmeldung 195 38 351.6-12 ist eine Kupplung zur Drehmomentbegrenzung beschrieben, bei der die zur Drehmomentübertragung vorgesehenen Mitnehmer Leistenform aufweisen und in als Schlitze dargestellten Ausnehmungen der Kupplungsnabe radial verstellbar geführt sind. Sie werden durch an ihren radial inneren Enden angeordnete Schaltflächen und auf diese mittels Stützflächen einwirkende Schaltringe in eine radial nach außen verschobene Position zur Drehmomentübertragung und zum Angriff an Drehmomentübertragungsflächen der Kupplungshülse gedrängt, wobei nur einer der Schaltringe durch eine Feder axial beaufschlagt ist. Um im Überlastfall eine vollständige Abschaltung zu erzielen, ist ein Fliehgewicht vorgesehen, das vom Schaltring, dem es zugeordnet ist, in der Drehmomentübertragungsposition in einer radial inneren Position gehalten wird und im Überlastungsfalle durch Verschieben des Schaltringes gegen die Kraft der ihn beaufschlagenden Feder zur Bewegung in eine Abschaltposition freigegeben werden, in welcher sie den Schaltring daran hindern, in die Drehmomentübertragungsposition zurückzukehren, bis eine vorgegebene Schaltdrehzahl unterschritten wird.

Durch die Abstützung der Mitnehmer an ihren beiden Enden an Stützflächen von Schaltringen, von denen nur einer axial ausweichen kann, wird eine radial axiale Verstellung der Mitnehmer bewirkt, so daß ein Schrägstellen auftreten kann. Hierdurch wird keine sichere Abschalt- oder Drehmomentübertragungsposition eingenommen.

Der Erfindung liegt daher die Aufgabe zugrunde, eine Kupplung zur Drehmomentbegrenzung zu schaffen, bei der ein vollständiges und gleichzeitiges Aus- bzw. Einrücken der Mitnehmer in die Abschaltposition bzw. die Drehmomentübertragungsposition gewährleistet ist.

Diese Aufgabe wird erfindungsgemäß dadurch gelöst, daß die Mitnehmer mit ihrer dem Schaltring abgewandten Stirnfläche gegen einen Stützring flächig und bezogen auf die Drehachse radial verstellbar abgestützt sind.

Von Vorteil bei dieser Ausbildung ist, daß die Mitnehmer sicher in die Abschalt- bzw. Drehmomentübertragungsposition radial verstellt werden, ohne daß ein Kippen und damit eine teilweise Ein- bzw. Abschaltung eintreten kann. Die Kontaktfläche zwischen dem Stützring und dem Mitnehmer ist relativ groß und verhindert somit sicher ein Kippen.

In Ausgestaltung der Erfindung ist vorgesehen, daß der Stützring an der Kupplungsnabe in Richtung der Drehachse festgelegt ist. Hierdurch wird die Herstellung der Kupplungsnabe mit den Ausnehmungen vereinfacht. Diese können nämlich axial durchgehend ausgebildet sein. Vorzugsweise ist dabei der Stützring zwischen einer dem Schaltring entfernten Seitenfläche der Kupplungsnabe und einem an der Kupplungsnabe festgelegten Sicherungselement gehalten. Hierzu ist beispielsweise ein Absatz vorgesehen, auf den der Stützring aufgeschoben ist und sich gegen die Seitenfläche der Kupplungsnabe anlegt, wobei das Sicherungselement in Form eines Sicherungsringes gestaltet und in einer Nut im Absatz aufgenommen ist. Die getrennte Ausbildung ermöglicht, daß die Ausnehmungen zur Aufnahme der Mitnehmer als radial und parallel zur Drehachse verlaufende Schlitze in der Kupplungsnabe ausgebildet sind.

Nach einer ersten Ausgestaltungsform ist jeder Mitnehmer in Form einer Leiste gestaltet, deren eine Stirnfläche flächig am Stützring anliegt und die zwischen dieser Stirnfläche und ihrer dem Schaltring gegenüberliegenden Stirnfläche radial außen die Drehmomentübertragungsfläche und die radial innen die Schaltfläche bzw. Schaltflächen aufweist. Eine der Stirnflächen eines jeden Mitnehmers dient somit zur radialen Führung an einer entsprechenden Gleitfläche des Stützringes.

Bei einer weiteren Ausführungsform sind die Mitnehmer als zylindrische Rollen gestaltet. Deren Mantelfläche bildet die Drehmomentübertragungsfläche. Deren eine Stirnfläche liegt flächig am Stützring an und deren andere Stirnfläche, die dem Schaltring gegenüberliegt, weist die Schaltflächen auf.

Eine besonders günstige Anwendung ergibt sich für eine Kupplung, bei der dem Schaltring mindestens ein Fliehgewicht zugeordnet ist, daß radial bezüglich der Drehachse zwischen einer radial äußeren Abschaltposition und einer radial inneren Drehmomentübertragungsposition verstellbar ist, wobei es durch den Schaltring in der Drehmomentübertragungsposition gegen Verstellung gehalten ist, so daß bei Überschreitung des vorgegebenen Drehmomentes vom Schaltring zur Verstellung in die Abschaltposition freigegeben ist. Das Fliehgewicht verhindert eine Rückstellung des Schaltringes in die Drehmomentübertragungsposition, solange eine vorgegebene Schaltdrehzahl überschritten wird.

Wird diese Grenzdrehzahl unterschritten, wird das Fliehgewicht in seine innere, der Drehmomentübertragungsposition entsprechenden Position, in welcher es der Drehachse angenähert ist, zurückgeführt. Es gibt dadurch den Schaltring frei, so daß dieser die Mitnehmer derart beaufschlagt, daß sie an dem Stützring abgestützt in ihre Drehmomentübertragungsposition, d.h. ihre radial nach außen verschobene Position wieder überführt werden. Dabei ist die Axialbewegung des Schaltringes begrenzt. Dieser kommt dann, wenn die Mitnehmer ihre Drehmomentübertragungsposition eingenommen haben, axial gegen die Kupplungsnabe zur Anlage. Dabei kann eine Gestaltung gewählt werden, bei der die Mitnehmer in dieser Position kraftfrei gehalten werden und diese den Schaltring erst dann gegen die Kraft der Feder verstellen, wenn ein Drehmoment anliegt.

Besonders günstige Verhältnisse hinsichtlich der Überführung in die Drehmomentübertragungsposition bzw. Abstützung in der Abschaltposition wird dadurch erreicht, daß die Mitnehmer jeweils erste und zweite Schaltflächen und der Schaltring jeweils erste und zweite Stützflächen aufweisen, wobei die ersten Schaltflächen und die ersten Stützflächen in der Drehmomentübertragungsposition der Mitnehmer und die zweiten Schaltflächen und zweiten Stützflächen in der Abschaltposition aneinanderliegen.

Dabei dienen die ersten Schaltflächen der Mitnehmer und die erste Stützfläche des Schaltringes zur Abstützung in der Drehmomentübertragungsposition und die zweiten Schaltflächen der Mitnehmer und die zweite Stützfläche des Schaltringes zur Abstützung in der Abschaltposition. Dabei ist der Verlauf der Schaltflächen und Stützflächen so gewählt, daß aufgrund der den Schaltring beaufschlagenden Feder eine entsprechende Abstützung in der Drehmomentübertragungsposition einerseits und unter Berücksichtung des Übersetzungsverhältnisses eine Abstützung des eingestellten Drehmomentes andererseits erreicht wird. Bei Überschreiten des eingestellten Drehmomentes erfolgt ein radiales Ausweichen der Mitnehmer nach innen, so daß die Kraft, die von der Feder als Radialkomponente auf die Mitnehmer ausgeübt wird, verringert wird. Somit erfolgt eine Wiedereinschaltung weniger plötzlich und unter geringerer Beaufschlagungskraft. Hierdurch wird ein positiver Einfluß auf das Verschleißverhalten ausgeübt. Des weiteren ist eine geringere Schwingungsanregung gegeben. Ferner ist die Anordnung der zweiten Schaltflächen und der als zweite Stützfläche dienenden Flächen so getroffen, daß der Schaltring mit axialem Abstand zum Fliehgewicht gehalten wird, wenn ein Überlastungsfall eingetreten und somit das Fliehgewicht freigegeben ist. Dabei ist ein axiales Spiel vorgesehen, das auch dann, wenn die Grenzdrehzahl, bei der das Fliehgewicht nach Überschreiten des vorgegebenen Grenzdrehmomentes nach außen verlagert wird, einen axialen Bewegungsspielraum zwischen Schaltring und Fliehgewicht zuläßt. Somit können die Mitnehmer aufgrund der Kraft der axial wirkenden Feder noch um ein geringes Maß radial nach außen in Richtung zur Drehmomentübertragungsposition bewegt werden, und zwar unter dem Einfluß des Verlaufes der zweiten Schaltflächen bzw. Stützflächen. Eine derartige Funktion ist aber auch dann gewährleistet, wenn keine zweiten Schaltflächen oder Stützflächen vorhanden sind. Bei einer weiteren relativen Drehbewegung zwischen Kupplungsnabe und Kupplungshülse können so die Mitnehmer mit ihrer Drehmomentübertragungsfläche die entsprechende Drehmomentübertragungsfläche der Kupplungshülse kurz berühren, nicht jedoch vollständig einrasten. Dabei ist durch die Führung der Mitnehmer am Stützring gewährleistet, daß dies gleichmäßig über die gesamte Länge der Drehmomentübertragungsflächen erfolgt. Insgesamt wird damit erreicht, daß die Relativdrehzahl derart abgesenkt werden kann, daß die Grenzdrehzahl, bei der das Fliehgewicht wieder nach innen geführt wird, unterschritten wird, wodurch der Schaltring freigegeben wird und die Mitnehmer gänzlich in die Drehmomentübertragungsposition überführt werden.

Für eine Kupplung mit Fliehgewichten wird ferner vorgeschlagen, daß das Fliehgewicht zwischen einer radial verlaufenden Führungsfläche der Kupplungsnabe und einem an der Kupplungshülse festgelegten Führungsring radial verstellbar geführt ist.

Vorzugsweise wird das Fliehgewicht durch Federkraft zur radial inneren Drehmomentübertragungsposition beaufschlagt und umfaßt mehrere Fliehsegmente.

Des weiteren ist vorgesehen, daß das Fliehgewicht und der Schaltring Halteflächen, die zur axialen Abstützung des Schaltringes gegen das Fliehgewicht dienen, aufweisen.

Zwei bevorzugte Ausführungsbeispiele einer Kupplung nach der Erfindung sind in der Zeichnung schematisch dargestellt.

Es zeigen
- Figur 1: einen Traktor mit angehängtem Gerät, das unter Zwischenschaltung einer der erfindungsgemäßen Kupplungen angetrieben wird,
- Figur 2: einen Längsschnitt durch eine erste erfindungsgemäße Kupplung in der Drehmomentübertragungsposition,
- Figur 3: einen Schnitt III-III gemäß Figur 2 bezüglich der Mitnehmer,
- Figur 4: einen Schnitt IV-IV gemäß Figur 2, aus dem die Stellung der Fliehsegmente des Fliehgewichtes in einer der Drehmomentübertragungsposition entsprechenden Position ersichtlich ist,
- Figuren 5 bis 7: den Figuren 2 bis 4 entsprechende Darstellungen jedoch in einer Position, bei der der Überlastfall eingetreten ist, d.h. sich die Mitnehmer und die Fliehsegmente sowie der Schaltring in der Abschaltposition befinden,
- Figuren 8 und 9: Schnittdarstellungen entsprechend Figuren 5 und 6, wobei sich die Kupplung im abgeschalteten Zustand befindet und die Grenzdrehzahl noch überschritten wird, in einer Relativstellung von Kupplungshülse und Kupplungsnabe, bei der die Mitnehmer zur Erzielung der Abbremsung eine geringe Verstellung nach außen erfahren haben,
- Figur 10: einen Längsschnitt durch eine weitere Kupplung nach der Erfindung, bei der die Mitnehmer als zylindrische Rollen ausgebildet sind, und zwar in der Drehmomentübertragungsposition,
- Figur 11: einen Schnitt XI-XI gemäß Figur 10,
- Figur 12: einen Längsschnitt entsprechend Figur 10, jedoch in Abschaltposition und
- Figur 13: einen Querschnitt XIII-XIII gemäß Figur 12.

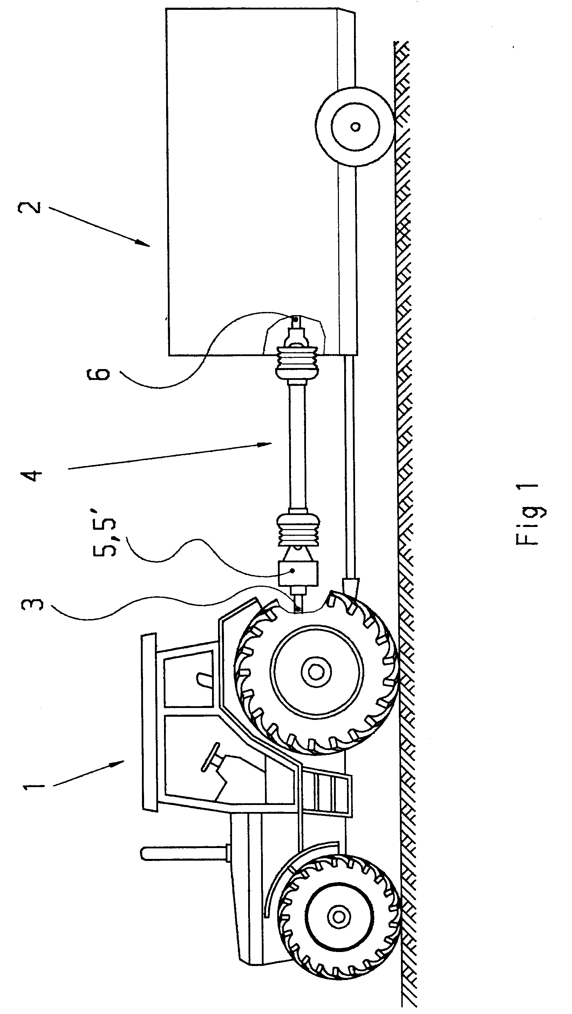

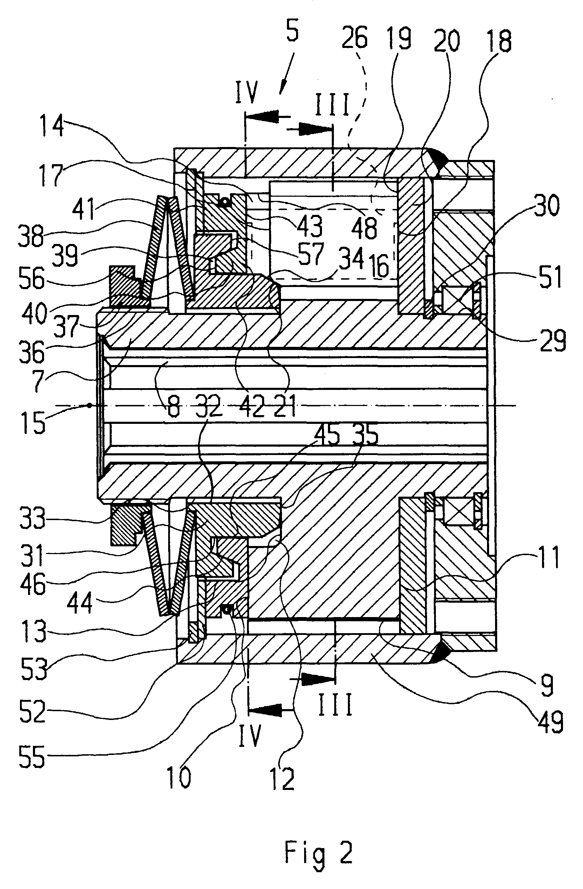

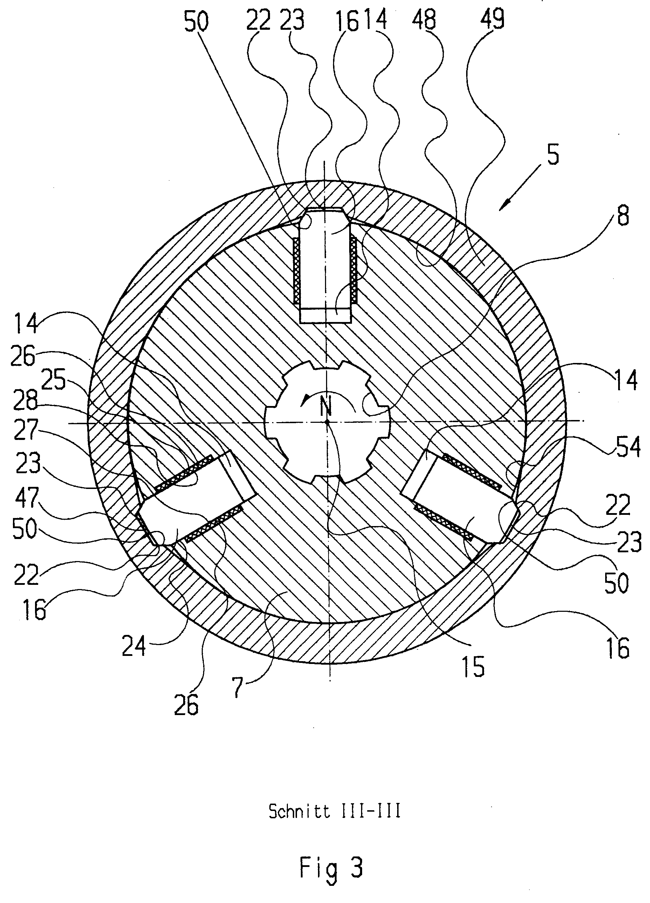

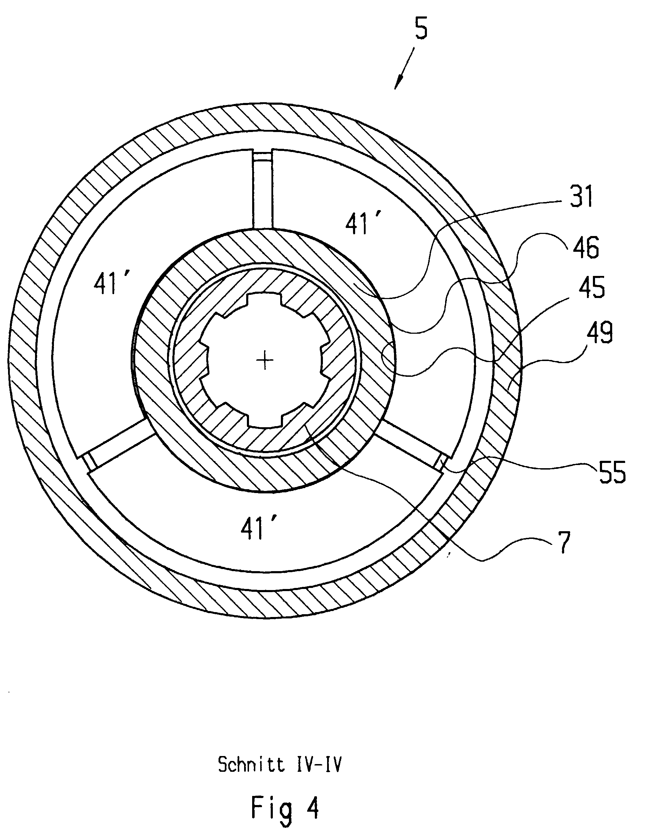

Aus Figur 1 ist der Traktor 1 mit dem angehängten Gerät 2 ersichtlich. Die Zapfwelle 3 des Traktors 1 dient dazu, mittels der Gelenkwelle 4 die Arbeitswerkzeuge des Gerätes, die nicht dargestellt sind, anzutreiben. Die Gelenkwelle 4 weist eine der erfindungsgemäßen Kupplungen 5, 5' auf, die zur Zapfwelle 3 hin angeordnet ist. Die Gelenkwelle 4 ist ferner geräteseitig mit der Antriebswelle 6 verbunden. Die Kupplung 5, 5' dient dazu, dann, wenn eine Überlastung beispielsweise durch Verstopfung im Bereich der Arbeitswerkzeuge des Gerätes 2 auftritt, den Antrieb zu unterbrechen, so daß die Zapfwelle 3 weiter rotiert, die Drehmomentübertragung auf die Gelenkwelle 4 jedoch unterbrochen ist. Der Aufbau der Kupplungen 5, 5' und deren Funktionsweise sind anhand der Figuren 2 bis 13 näher erläutert.

In den Figuren 2 bis 4 ist eine erste Ausführungsform der Kupplung 5 in der Drehmomentübertragungsposition dargestellt. Die Kupplung 5 weist eine Kupplungsnabe 7 auf, die eine bezüglich der Drehachse 15 zentrale Aufsteckbohrung 8 besitzt, die dazu bestimmt ist, eine drehfeste Verbindung zwischen der Kupplungsnabe 7 und beispielsweise der aus Figur 1 ersichtlichen Zapfwelle des Traktors herzustellen. Die Außenfläche 9 der Kupplungsnabe 7 ist zylindrisch gestaltet. Sie wird durch die beiden Seitenflächen 10, 11, die radial verlaufen, begrenzt. In der Seitenfläche 10 befindet sich eine Ringausnehmung 12. Darüber hinaus sind mehrere Ausnehmungen 14 in Schlitzform umfangsverteilt angeordnet. Diese erstrecken sich parallel zur Drehachse 15 und sind sowohl zur Außenfläche 9 als auch zu den Seitenflächen 10, 11 offen. Bei dem dargestellten Ausführungsbeispiel sind drei umfangsverteilte Ausnehmungen 14 vorgesehen, die gleichmäßig verteilt sind, d.h. zwischen denen jeweils ein Winkel von 120° eingeschlossen ist. Es kann aber auch eine davon abweichende Teilung vorgesehen sein, derart, daß eine Wiedereinschaltung der Kupplung immer nur nach einer vollen Relativdrehung um 360° erfolgt. Die im Bereich der Seitenfläche 10 vorgesehene Ringausnehmung 12 bildet eine radial verlaufende Führungsfläche 13. Die Ausnehmungen 14 nehmen Mitnehmer 16 in Leistenform auf. Die Mitnehmer 16 sind gleichlang oder kürzer ausgebildet als die Ausnehmungen 14 zwischen den beiden Seitenflächen 10, 11. Sie ragen jedoch mit ihrer Stirnfläche 17 bis in den Bereich der Ringausnehmung 12 hinein. Die andere Stirnfläche 18 der Mitnehmer 16 stützt sich gegen eine Gleitfläche 19 eines Stützringes 20 zur Drehachse 15 radial verstellbar ab, so daß die Mitnehmer 16 gegen Kippen sicher geführt sind. Am Fußbereich, d.h. dem radial inneren Bereich der Stirnfläche 17 sind die Mitnehmer 16 mit einer ersten Schaltfläche 21 versehen, welche bezogen auf die Drehachse 15 flach verläuft. Die sich zum Kopf eines jeden Mitnehmers 16 hin anschließend steil, d.h. radial verlaufende Stirnfläche 17 dient als zweite Schaltfläche. Für die Kraftübertragung in Antriebsdrehrichtung gemäß Pfeilrichtung N durch die Kupplungsnabe 7 weist jeder Mitnehmer 16 am Kopf eine sich zwischen den Stirnflächen 17, 18 erstreckende Drehmomentübertragungsfläche 22 auf, welche in den Kopfflächen 23 enden. Vom Prinzip her ist die Kupplung auch in der der Pfeilrichtung N entgegengesetzten Drehrichtung als Überlastkupplung wirksam. Eine Beschreibung erfolgt jedoch nur für die Antriebsdrehrichtung N über die Kupplungsnabe 7. In den Anlageflächen 24, 25 der Mitnehmer 16 sind Nuten eingearbeitet, in denen Gleitscheiben 26 aufgenommen sind, um die Reibung und den Verschleiß bei Abstützung der Drehkraft an den Abstützflächen 27, 28 der Ausnehmungen der Kupplungsnabe herabzusetzen. Der Stützring 20 ist auf einem Absatz 29 zwischen der Seitenfläche 11 und einem Sicherungsring 30 in Richtung der Drehachse 15 festgelegt.

Seitlich der Seitenfläche 10 ist ein Schaltring 31 angeordnet, der in Richtung der Drehachse 15 verstellbar ist. Dieser besitzt eine Bohrung 32, mit der er mit Spiel zur Außenfläche 33 eines Absatzes der Kupplungsnabe 7 angeordnet ist. Damit ist der Schaltring 31 in radialer Richtung um ein gewisses Spiel frei beweglich. Der Schaltring 31 besitzt einen Ansatz, der bis in die Ringausnehmung 12 hineinragt und der mit seiner rechten Stirnfläche zur Führungsfläche 13 in der Drehmomentübertragungposition in Anlage ist. Er besitzt eine erste Stützfläche 34, die in der Drehmomentübertragungsposition an den ersten Schaltflächen 21 der drei Mitnehmer 16 in Anlage ist. Die erste Stützfläche 34 kann beispielsweise die Form einer umlaufenden Kegelfläche aufweisen. Sie ist der ersten Schaltfläche 21 entsprechend ausgebildet, so daß in Drehmomentübertragungsposition beide in flächiger Anlage zueinander sind. Der Schaltring 31 besitzt darüber hinaus eine zweite Stützfläche 35, die im Bereich seiner Stirnfläche angeordnet ist, die zur Seitenfläche 10 hinweist. Die Stützfläche 35 ist zur Anlage an der die zweite Schaltfläche bildenden Stirnfläche 17 der Mitnehmer 16 bestimmt, wenn sich diese in der Abschaltposition befinden. Die Kupplungsnabe 7 weist an ihrem dem Schaltring 31 zugeordneten Ende ein Außengewinde 36 auf, auf welches eine Mutter 37 aufgeschraubt ist. Diese dient als Abstützbasis für eine Feder 38, die als Tellerfeder aufgebaut ist und die sich mit ihrem anderen Ende gegen den Schaltring 31 abstützt und diesen in Richtung zu der als Anschlag dienenden Führungsfläche 13 drückt. Der Schaltring 31 weist in seiner zur Seitenfläche 10 der Kupplungsnabe 7 hin angeordneten Ringfläche eine Ringausnehmung 39 auf, die eine Kegelfläche 40 besitzt, welche sich zur Feder 38 hin verjüngt. Ein Fliehgewicht 41 bzw. dessen drei ringsektorförmigen Fliehsegmente 41' greifen mit einer Haltenase 42 in die Ringausnehmung 39 des Schaltringes 31 ein. Die Fliehsegmente 41', die das Fliehgewicht 41 bilden, besitzen erste Führungsflächen 43, auf denen die Drehachse 15 senkrecht steht und die zur Führung der Fliehsegmente 41' in radialer Richtung an der Seitenfläche 10 der Kupplungsnabe 7 dienen. Gleichzeitig können sich hieran die Mitnehmer 16 mit ihrer Stirnfläche 17 zur kippgesicherten Führung zusätzlich anlegen. Ferner weisen die Fliehsegmente 41' an ihrer Haltenase 42 eine Kegel- bzw. Teilkegelfläche als Haltefläche 44 auf, die der Kegelfläche 40 der Ringausnehmung 39 entspricht und durch die in der dargestellten Position die Fliehsegmente 41' in ihrer radial inneren Stellung bezüglich der Drehachse 15 gehalten sind. Sie sind mit ihrer Innenfläche 45 zur Anlage an der abgesetzten sitzflache 46 des Schaltringes 31 durch eine Schlauchfeder 55, die durch eine zu einem Ring geformte Zug-Schraubenfeder gebildet ist, beaufschlagt. Ferner werden sie durch die Ringausnehmung 12 in Verbindung mit der Haltenase 42 eingeschlossen gehalten, solange sich die Mitnehmer 16 in der Drehmomentübertragungsposition gemäß Figuren 2 bis 4 befinden. Die Anordnung ist so getroffen, daß der Schaltring 31 durch die Feder 38 nach rechs in Richtung auf die Mitnehmer 16 gedrückt wird, wobei sich seine erste Stützfläche 34 an der ersten Schaltfläche 21 abstützt und jeder Mitnehmer 16 widerum über seine Stirnfläche 18 gegen die Gleitfläche 19 des Stützringes 30 abgestützt wird. In dieser Position werden die Mitnehmer 16 so gehalten, daß sie sich in Eingriff zu entsprechend umfangsverteilten Ausnehmungen 47, die nutenartig gestaltet und in der Lagerbohrung 48 einer Kupplungshülse 49 angeordnet sind, befinden und dabei mit ihrer jeweiligen Drehmomentübertragungsfläche 22 in Anlage zu entsprechenden Drehmomentübertragungsflächen 50 der Kupplungshülse 49 sind. Die Kupplungshülse 49 ist mit ihrer Lagerbohrung 48 auf der Außenfläche 9 bzw. durch das Wälzlager 51 auf dem Absatz 29 der Kupplungsnabe 7 gelagert. Die Kupplungsnabe 7 ist hierdurch gegen axiale Verschiebung gehalten. Kupplungsnabe 7 und Kupplungshülse 49 können sich bezüglich der Drehachse 15 relativ zueinander drehen bzw. gemeinsam um die Drehachse 15 zur Drehmomentübertragung rotieren. Solange keine Drehmomentbeaufschlagung erfolgt, wird der Schaltring 31 auch nicht von den Mitnehmern 16 belastet. Die Fliehsegmente 41' sind in einem Bohrungsabschnitt der Kupplungshülse 49 aufgenommen, und ihre radiale Bewegung wird durch deren Wandung begrenzt. Die Fliehsegmente 41' sind zwischen einer Führungsscheibe 52, die an der Kupplungshülse 49 durch einen Sicherungsring 53 festgelegt ist und der Seitenfläche 10 der Kupplungsnabe 7 radial geführt.

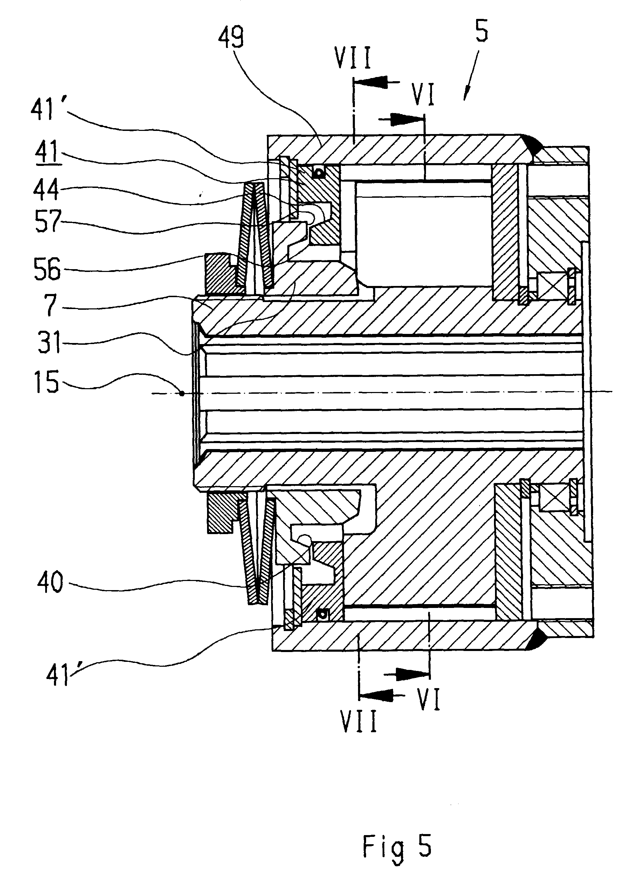

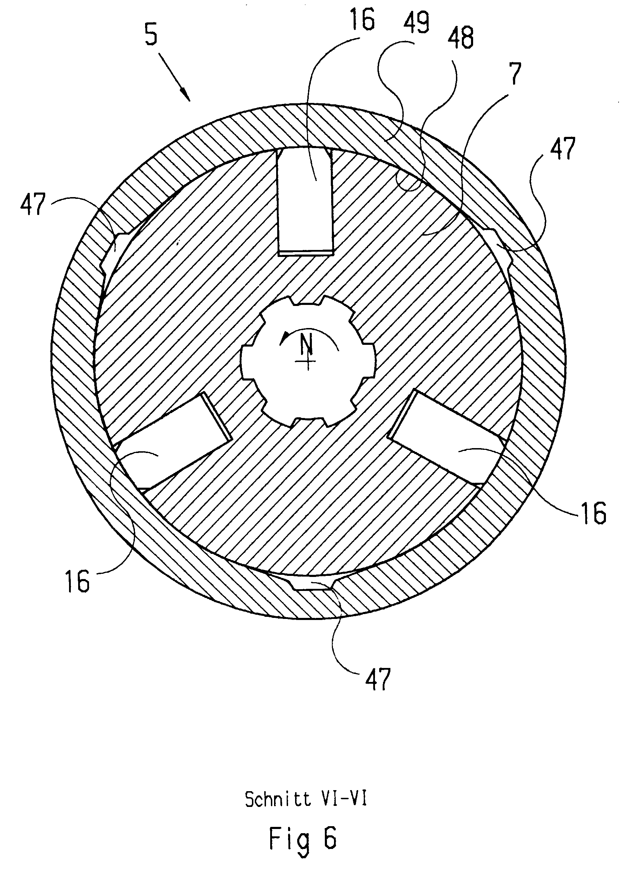

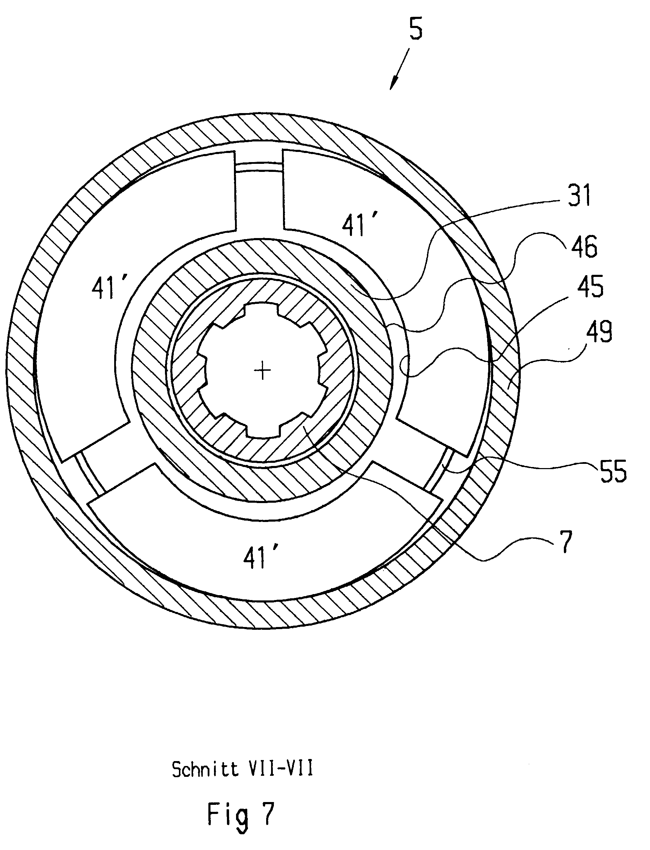

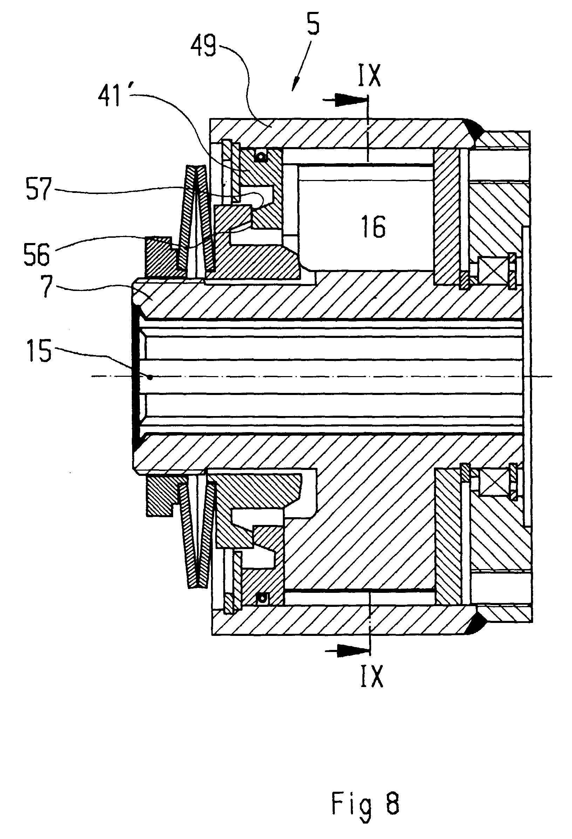

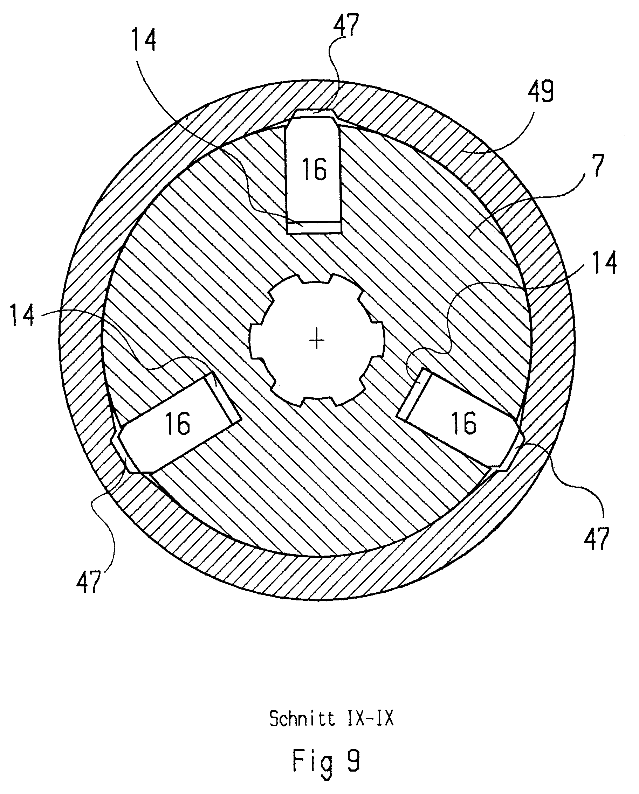

Die Fliehsegmente 41' weisen im Bereich ihrer Haltenasen 42 nach links, d.h. zu der Feder 38 hin eine Haltefläche 56 auf. Der Schaltring 31 besitzt eine entsprechende Ringfläche, die als Haltefläche 57 dient. In Drehrichtung N ist vor den Ausnehmungen 47 jeweils eine Steuerfläche 54 angeordnet, die außerhalb eines Kreises liegt, der durch den Durchmesser der Lagerbohrung 48 begrenzt wird und dazu dient, bei Überschreiten des eingestellten Drehmomentes der Mitnehmer 16 zur Wiedereinschaltung in Richtung auf die Ausnehmungen 47 zu führen. Im Falle des Eintritts einer Überlast, ausgehend von der Drehmomentübertragungsposition gemäß Figuren 2 bis 4, werden die Mitnehmer 16 radial nach innen verlagert, was in den Figuren 5 und 6 dargestellt ist. Dabei wird der Schaltring 31 gegen die Kraft der Feder 38 nach links bewegt. Dabei gelangen die die zweiten Schaltflächen bildenden Stirnflächen 17 der Mitnehmer 16 in Kontakt zu der zweiten Stützfläche 35 des Schaltringes 31. Die Mitnehmer 16 befinden sich in der Abschaltposition, in der sie nach innen in Annäherung zur Drehachse 15 verlagert sind. Das eingestellte Drehmoment kann nicht mehr übertragen werden. Die Kupplungsnabe 7 kann schneller rotieren als die Kupplungshülse 49, und zwar in Antriebsdrehrichtung N. Durch die Verschiebung des Schaltringes 31 nach links in Richtung auf die Mutter 37 zu wird die Haltenase 42 der Fliehsegmente 41' freigegeben. Dies bedeutet, daß die Halteflächen 44 der Fliehsegmente 41' außer Kontakt zu der Kegelfläche 40 des Schaltringes 31 gelangen und bei Auftreten einer entsprechenden Drehzahl gegen die Kraft der Schlauchfeder 55 nach außen wandern können, bis sie mit ihrer Außenfläche in Anlage zur Wandung der Bohrung der Kupplungshülse 49 sind. Diese Stellung ist aus den Figuren 5 und 7 ersichtlich. Durch den Verlauf der als zweite Schaltflächen dienenden Stirnflächen 17 der Mitnehmer 16 und der zweiten Stützfläche 35 des Schaltringes 31 wird nur eine geringe Kraft auf die Mitnehmer 16 durch die Feder 38 und den Schaltring 31 ausgeübt, welche versucht, diese in die radial äußere Position, d.h. zum Eingriff in die Ausnehmung 47 der Kupplungshülse 49 zu verschieben. An einem gänzlichen Eintauchen werden sie jedoch dadurch gehindert, daß beide Halteflächen 56, 57, die normalerweise mit einem geringen Abstand zueinander gehalten sind, wie aus den Figuren 8 und 9 ersichtlich, zur Anlage aneinander kommen und ein weiteres Eintauchen verhindern. Danach erfolgt wieder ein Abheben, da die Mitnehmer 16 ein Stück radial nach innen bewegt werden, bis ihre Kopfflächen 23 sich wieder in Anlage zur Lagerbohrung 48 befinden. Dies wiederholt sich solange die Drehzahl überschritten wird, welche die Fliehsegmente 41' in ihrer radial äußeren Position hält. Sinkt die Drehzahl ab, beispielsweise dadurch, daß der Antrieb der Zapfwelle des Traktors ausgeschaltet und die Grenzdrehzahl, bei der die Fliehsegmente 41' ihre radial äußere Position einnehmen, unterschritten wird, so zwingt die Schlauchfeder 55 die Fliehsegmente 41' dazu, ihre radial innere Position einzunehmen. Diese legen sich mit ihrer Innenfläche 45 an die Sitzfläche 46 des Schaltringes 31 an. Bei einer so abgesenkten Drehzahl können die Mitnehmer 16 unter der Kraft der Feder 38 bei Erreichen einer übereinstimmenden Lage zu den Ausnehmungen 47 in diese eintreten und ihre Drehmomentübertragungsflächen 23 an den entsprechenden Drehmomentübertragungsflächen 50 der Ausnehmungen 47 zur Anlage kommen. Dabei verschiebt sich der Schaltring 31 wieder in die in den Figuren 2 bis 4 dargestellte Lage. Bei der Überführung der Mitnehmer 16 in die Drehmomentübertragungsposition führen diese eine Radialbewegung bezüglich der Drehachse 15 mit ihrer Stirnfläche 18 an der Gleitfläche 19 des Stützringes 20 aus, so daß sie gleichmäßig zum Eingriff verstellt werden.

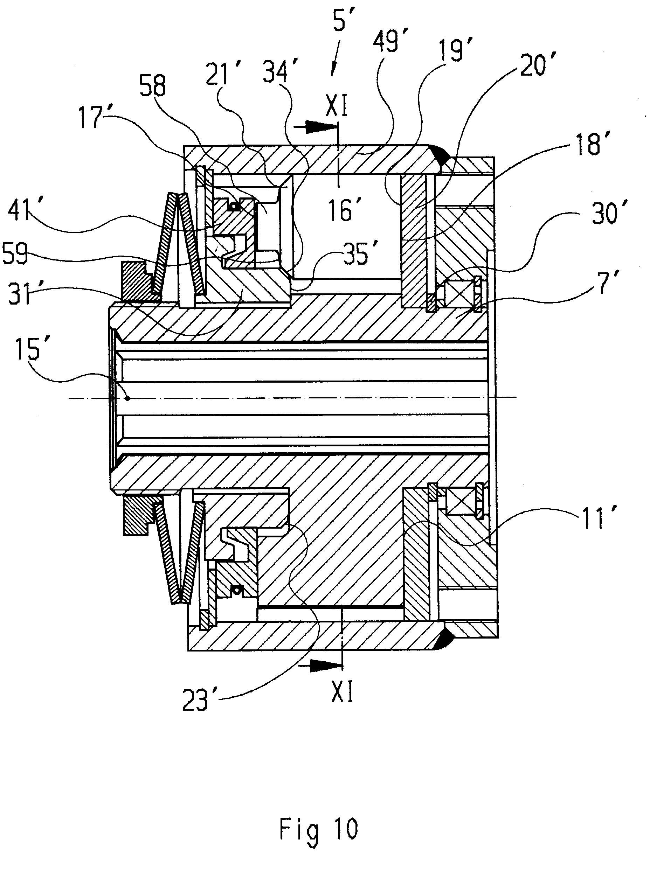

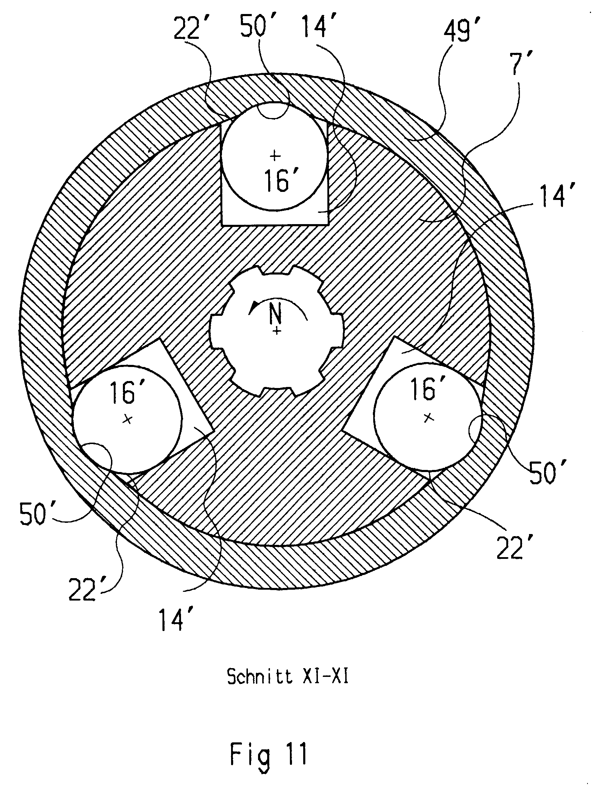

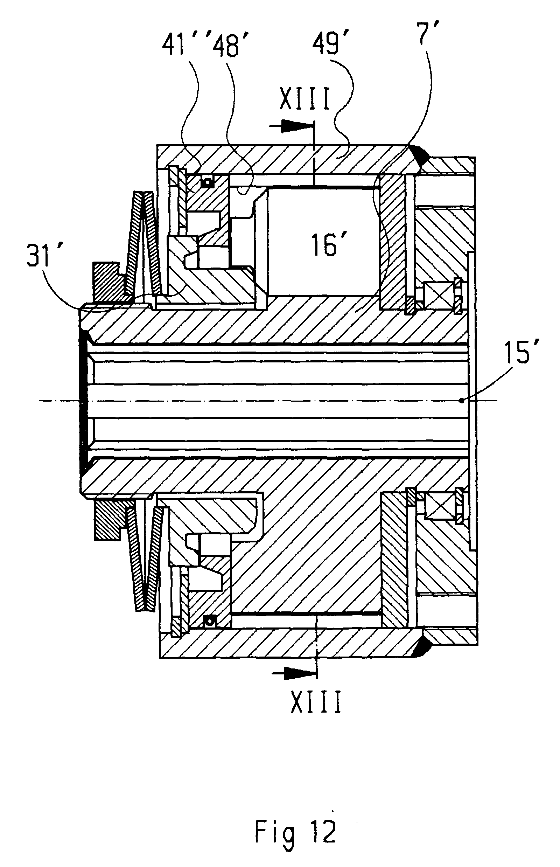

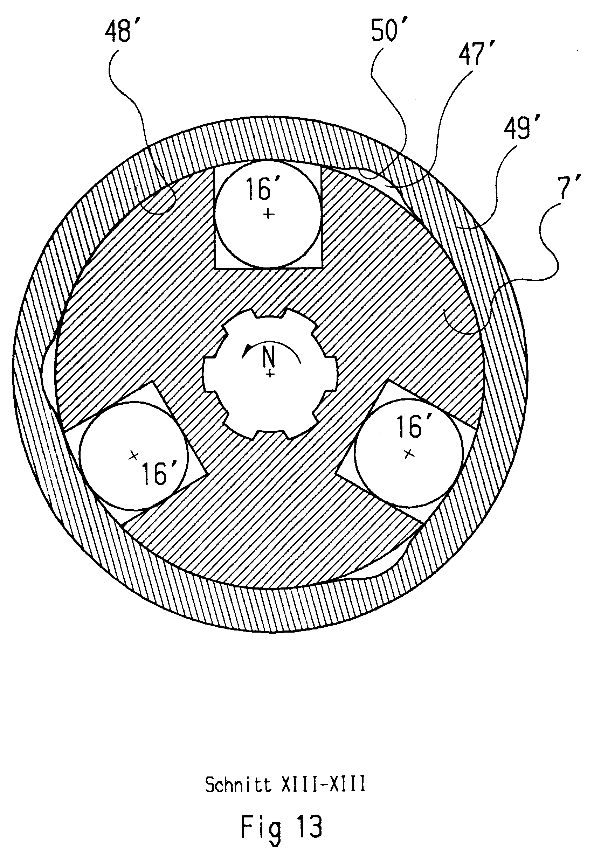

Die Figuren 10 bis 13 zeigen eine weitere Ausführungsform einer Kupplung nach der Erfindung, zu welcher nur die Unterschiede zu der nach den Figuren 2 bis 9 entsprechen, wobei die Figuren 10 und 11 die Drehmomentübertragungsposition und die Figuren 12 und 13 die Abschaltposition zeigen.

Die Kupplung nach den Figuren 10 bis 13 entspricht im wesentlichen der Kupplung nach den Figuren 2 bis 9, wobei sie sich jedoch hinsichtlich der Ausbildung der Mitnehmer unterscheiden. Bei der Ausführungsform nach den Figuren 10 bis 13 sind Mitnehmer 16' in Form von Zylinderrollen vorgesehen, deren zylindrische Mantelfläche jeweils die Drehmomentübertragungsfläche 22' zum Eingriff eine der Ausnehmungen 47' der Kupplungshülse 49' bildet und zur Abstützung an der Drehmomentübertragungsfläche 50' der Kupplungshülse 49' in der Drehmomentübertragungsposition, wie sie sich aus den Figuren 10 und 11 ergibt, kommen. Die Mitnehmer 16' weisen eine kreisrunde Stirnfläche 18' auf, mit der sie an der Gleitfläche 19' des Stützringes 20' abgestützt sind. Dieser ist ebenfalls wie beim ersten Ausführungsbeispiel an der Kupplungsnabe 7' zwischen der Seitenfläche 11' und einem Sicherungselement 30' festgelegt. Zum Schaltring 31' hin weist ein jeder Mitnehmer 16' eine erste Schaltfläche 21' in Form einer Kegelfläche auf, die zur Abstützung an einer entsprechenden Stützfläche 34' des Schaltringes 31', die ebenfalls als Kegelfläche gestaltet ist, bestimmt ist.

Zur Stirnfläche des Schaltringes 31', die den Mitnehmern 16' gegenüberliegt, ist eine zweite Stützfläche 34' vorgesehen, die zur Anlage an der zweiten Schaltfläche 59 der Mitnehmer 16' in der Abschaltposition dient. Diese verläuft steiler als die erste Schaltfläche 21'. Die zweite Schaltfläche 59 entsteht dadurch, daß die Mitnehmer 16' im Durchmesser abgesetzt sind, wobei ein Ansatz 58 gebildet ist, der in der Stirnfläche 17' endet. Die Stirnfläche 17' dient zur zusätzlichen Führung der Mitnehmer 16' an einer entsprechenden Fläche des Fliehgewichtes 41''. Die Mitnehmer 16' in Form der zylindrischen Rollen werden also zweifach geführt, und zwar sind sie an ihren beiden Enden jeweils durch ihre Stirnflächen 17', 18' geführt, so daß ein Kippen wirksam verhindert ist.

Aus Figur 11 ist die Querschnittsgestaltung der als Zylinderrollen dargestellten Mitnehmer 16' und deren Anlage mit der Drehmomentübertragungsfläche 22' an der entsprechenden Übertragungsfläche 50' der Kupplungshülse 49' ersichtlich. Ferner sind die Ausnehmungen 14' erkennbar, in denen die Mitnehmer 16' radial verstellbar aufgenommen sind.

Die Figuren 12 und 13 zeigen die Mitnehmer 16' in ihrer radial nach innen verlagerten, d.h. der Drehachse 15' angenäherten Abschaltposition. Dabei ist ersichtlich, daß die Fliehsegmente des Fliehgewichtes 41'' radial nach außen verstellt sind und den Schaltring 31' gegen eine Überführung in die Drehmomentübertragungsposition hindern. Wie aus Figur 13 ersichtlich, sind die Mitnehmer 16' aus den Ausnehmungen 47' ausgetreten und wälzen an der Wandung der Lagerbohrung 48' bei Relativdrehung der Kupplungsnabe 7' zur Kupplungshülse 49' ab.

### Bezugszeichenliste

- 1: Traktor
- 2: Gerät
- 3: Zapfwelle
- 4: Gelenkwelle
- 5, 5': Kupplung
- 6: Antriebswelle
- 7, 7': Kupplungsnabe
- 8: Aufsteckbohrung
- 9: Außenfläche
- 10, 11, 11': Seitenfläche
- 12: Ringausnehmung
- 13: Führungsfläche
- 14, 14': Ausnehmung
- 15, 15': Drehachse
- 16, 16': Mitnehmer
- 17, 17': Stirnfläche
- 18, 18': Stirnfläche
- 19, 19': Gleitfläche
- 20, 20': Stützring
- 21, 21': erste Schaltfläche
- 22, 22': Drehmomentübertragungsfläche
- 23, 23': Kopffläche
- 24, 25: Anlagefläche
- 26: Gleitscheiben
- 27, 28: Abstützfläche
- 29: Absatz
- 30, 30': Sicherungsring
- 31, 31': Schaltring
- 32: Bohrung
- 33: Außenfläche
- 34, 34': erste Stützfläche
- 35, 35': zweite Stützfläche
- 36: Außengewinde
- 37: Mutter
- 38: Feder
- 39: Ringausnehmung
- 40: Kegelfläche
- 41, 41'': Fliehgewicht
- 41': Fliehsegmente
- 42: Haltenase
- 43: erste Führungsfläche
- 44: Haltefläche
- 45: Innenfläche
- 46: Sitzfläche
- 47, 47': Ausnehmung
- 48, 48': Lagerbohrung
- 49, 49': Kupplungshülse
- 50, 50': Drehmomentübertragungsfläche der Kupplungshülse
- 51: Wälzlager
- 52: Führungsscheibe
- 53: Sicherungsring
- 54: Steuerfläche
- 55: Schlauchfeder
- 56, 57: Haltefläche
- 58: Ansatz
- 59: zweite Schaltfläche
- N: Antriebsdrehrichtung der Kupplungsnabe

## Patentansprüche

1. Kupplung (5, 5') zur Drehmomentbegrenzung, insbesondere im Antriebsstrang zum Antrieb landwirtschaftlicher Geräte (2) oder Maschinen, mit einer Kupplungsnabe (7, 7') und koaxial mit einer Lagerbohrung (48, 48') um diese angeordneten und daran relativ drehbar gelagerten Kupplungshülse (49, 49'), mit Mitnehmern (16, 16'), von denen jeder in einer Ausnehmung (14, 14') der Kupplungsnabe (7, 7') radial bezüglich einer Drehachse (15, 15') zwischen einer Drehmomentübertragungsposition und einer Abschaltposition verstellbar ist und jeder Mitnehmer (16, 16') mindestens eine Schaltfläche (21, 21', 17, 59) besitzt und eine Drehmomentübertragungsfläche (22, 22') aufweist, wobei letztere in der Drehmomentübertragungsposition an einer Drehmomentübertragungsfläche (50, 50') in der Lagerbohrung (48, 48') der Kupplungshülse (49, 49') angreift, mit einem in Richtung der Drehachse (15, 15') an einer Seite der Mitnehmer (16, 16') verstellbar angeordneten Schaltring (31, 31'), der eine der Anzahl der Schaltflächen (21, 21', 17, 59) entsprechende Anzahl von Stützflächen (34, 34', 35, 35') zur Abstützung an den Schaltflächen (21, 21', 17, 59) der Mitnehmer (16, 16') aufweist und der in Richtung der Drehachse (15, 15') federbeaufschlagt ist und die Mitnehmer (16, 16') in die nach radial außen verlagerte Drehmomentübertragungsposition drängt und der entgegen der Kraft der Feder (38) eine Verstellung der Mitnehmer (16, 16') in die radial innere Abschaltposition bei Überschreitung eines vorgegebenen Drehmomentes zuläßt,
dadurch gekennzeichnet,
daß die Mitnehmer (16, 16') mit ihrer dem Schaltring (31, 31') abgewandten Stirnfläche (18, 18') gegen einen Stützring (20, 20') flächig und bezogen auf die Drehachse (15, 15') radial verstellbar abgestützt sind.

2. Kupplung nach Anspruch 1,
dadurch gekennzeichnet,
daß der Stützring (20, 20') an der Kupplungsnabe (7, 7') in Richtung der Drehachse (15, 15') festgelegt ist.

3. Kupplung nach Anspruch 2,
dadurch gekennzeichnet,
daß der Stützring (20, 20') zwischen einer dem Schaltring (31, 31') entfernten Seitenfläche (11, 11') der Kupplungsnabe (7, 7') und einem an der Kupplungsnabe (7, 7') festgelegten Sicherungselement (30, 30') festgelegt ist.

4. Kupplung nach Anspruch 1,
dadurch gekennzeichnet,
daß die Ausnehmungen (14, 14') zur Aufnahme der Mitnehmer (16, 16') als radial und parallel zur Drehachse (14, 14') verlaufende Schlitze in der Kupplungsnabe (7, 7') ausgebildet sind.

5. Kupplung nach Anspruch 4,
dadurch gekennzeichnet,
daß jeder Mitnehmer (16) die Form einer Leiste aufweist, deren eine Stirnfläche (18) flächig am Stützring (20) anliegt und die zwischen der Stirnfläche (18) und ihrer dem Schaltring (31) gegenüberliegenden Stirnfläche (17) radial außen die Drehmomentübertragungsfläche (22) und die radial innen die Schaltfläche(-n) (21) aufweist.

6. Kupplung nach Anspruch 4,
dadurch gekennzeichnet,
daß jeder Mitnehmer (16') die Form einer zylindrischen Rolle aufweist, deren Mantelfläche die Drehmomentübertragungsfläche (22') bildet, daß deren eine Stirnfläche (18') flächig am Stützring (20') anliegt und daß deren andere Stirnfläche (59), die dem Schaltring (31') gegenüberliegt, die Schaltfläche(-n) (21', 59) aufweist.

7. Kupplung nach Anspruch 1,
dadurch gekennzeichnet,
daß dem Schaltring (31, 31') mindestens ein Fliehgewicht (41, 41'') zugeordnet ist, das radial bezüglich der Drehachse (15, 15') zwischen einer radial äußeren Abschaltposition und einer radial inneren Drehmomentübertragungsposition verstellbar ist, wobei es durch den Schaltring (31, 31') in der Drehmomentübertragungsposition gegen Verstellung gehalten ist und es bei Überschreitung des vorgegebenen Drehmomentes vom Schaltring (31, 31') zur Verstellung in die Abschaltposition freigegeben ist, und daß das Fliehgewicht (41, 41'') eine Rückstellung des Schaltringes (31, 31') in die Drehmomentübertragungsposition verhindert, solange eine vorgegebene Schaltdrehzahl überschritten wird.

8. Kupplung nach Anspruch 1,
dadurch gekennzeichnet,
daß die Mitnehmer (16, 16') jeweils erste (21, 21') und zweite (17, 59) Schaltflächen und der Schaltring (31, 31') jeweils erste (23, 23') und zweite (35, 35') Stützflächen aufweisen, wobei die ersten Schaltflächen (21, 21') und die ersten Stützflächen (23, 23') in der Drehmomentübertragungsposition der Mitnehmer (16, 16') und die zweiten Schaltflächen (17, 59) und zweiten Stützflächen (35, 35') in der Abschaltposition aneinanderliegen.

9. Kupplung nach Anspruch 7,
dadurch gekennzeichnet,
daß das Fliehgewicht (41, 41'') zwischen einer radial verlaufenden Führungsfläche (10) der Kupplungsnabe (7, 7') und einem an der Kupplungshülse (49, 49') festgelegten Führungsring (52) radial verstellbar geführt ist.

10. Kupplung nach Anspruch 7,
dadurch gekennzeichnet,
daß das Fliehgewicht (41, 41'') durch Federkraft zur radial inneren Drehmomentübertragungsposition beaufschlagt ist.

11. Kupplung nach Anspruch 7,
dadurch gekennzeichnet,
daß das Fliehgewicht (41, 41'') mehrere Fliehsegmente (41') umfaßt.

12. Kupplung nach Anspruch 7,
dadurch gekennzeichnet,
daß das Fliehgewicht (41, 41'') und der Schaltring (31, 31') Halteflächen (56, 57), die zur axialen Abstützung des Schaltringes (31, 31') gegen das Fliehgewicht (41, 41'') dienen, aufweisen.
